# EUROPÄISCHE PATENTSCHRIFT

(11) **EP 2 532 905 B1**
(45) Veröffentlichungstag und Bekanntmachung des Hinweises auf die Patenterteilung: **29.01.2014**
(21) Anmeldenummer: 12166732.3
(22) Anmeldetag: 04.05.2012
(51) Int. Cl.: C08K 3/00, C08L 27/18, C08J 3/22, F16C 33/20

(54) **Gleitlagerverbundwerkstoff und hieraus hergestelltes Gleitlagerelement**
Sliding bearing compound material and sliding bearing element made of same
Matériau composite pour palier lisse et élément de palier lisse fabriqué avec celui-ci

(30) Priorität: 06.06.2011 DE 102011077008
(43) Veröffentlichungstag der Anmeldung: 12.12.2012
(73) Patentinhaber: KS Gleitlager GmbH, 68789 St. Leon-Rot (DE)
(72) Erfinder: Taipalus, Riitta, 67117 Limburgerhof (DE); Reinicke, Rolf, Dr., 76669 Bad Schönborn (DE); Pasternak, Axel, 76669 Bad Schönborn (DE)
(74) Vertreter: Dreiss

(56) Entgegenhaltungen:
- EP-A2- 0 119 815
- DE-A1- 2 433 401
- DE-A1- 4 200 385
- DE-A1- 10 126 460
- DE-A1- 19 524 968
- GB-A- 2 123 430

## Beschreibung

Die Erfindung betrifft einen Gleitlagerverbundwerkstoff mit einer Stützschicht, insbesondere aus Stahl oder Bronze, optional einer darauf aufgebrachten porösen Gleitschicht, insbesondere aus Bronze, und mit einem Gleitschichtmaterial auf PTFE-Basis, mit tribologische Eigenschaften verbessernden Füllstoffen. Sofern eine poröse Gleitschicht vorgesehen ist, ist das Gleitschichtmaterial in die Poren der Gleitschicht einimprägniert. Sofern keine poröse Gleitschicht vorgesehen ist, kann das Gleitschichtmaterial direkt oder unter Vermittlung einer Haftvermittlungsschicht, insbesondere Kleberschicht, auf die Stützschicht aufgebracht sein. Es ist auch denkbar, dass die Stützschicht selbst Ausnehmungen aufweist und insbesondere von einem Streckmetallgitter oder einem Gewebe oder Gewirke gebildet ist. Solchenfalls dringt das Gleitschichtmaterial in diese Struktur ein und ist dadurch besser gehalten.

Derartige Gleitlagerverbundwerkstoffe sind umfangreich bekannt geworden und üblich, siehe z.B. DE 101 26 460 A1 oder DE 195 24 968 A1. Besonders für hochbelastete Anwendungen, wie sie im Automobilbereich auftreten, wird eine hohe Verschleißfestigkeit und ein niedriger Reibwert gefordert. Um für die Praxis geeignete tribologische Eigenschaften des Gleitlagerverbundwerkstoffs auch unter Trockenschmierung zu erreichen, wird typischerweise PTFE als Polymerbasis des Gleitschichtmaterials eingesetzt. PTFE allein weist zwar einen hervorragenden Reibwert auf; es ist jedoch zu weich um ausreichend verschleißfest zu sein. Daher werden für kritische Anwendungen, zum Beispiel Gleitlagerbuchsen für ein Zweimassenschwungrad bei Kraftfahrzeugkupplungen, weitere die tribologischen Eigenschaften verbessernde Füllstoffe der Polymerbasis zugegeben. Es ist eine Vielzahl von Füllstoffen bzw. Füllstoffgemischen bekannt geworden, welche die Verschleißfestigkeit erhöhende Verstärkungsstoffe aber auch weitere tragende oder stützende Stoffe sowie Festschmierstoffe umfassen. Dabei können auch polymere Thermoplaste oder Duroplaste als Füllstoffe Verwendung finden.

Aus DE 42 00 385 A1, EP 0 119 815 A2, GB 2 123 430 A, DE 24 33 401 A1 sind nicht gattungsgemäße Gleitlagerverbundwerkstoffe bekannt, deren Gleitschichtmaterial auf Basis eines tragenden von PTFE verschiedenen Polymers gebildet ist und die PTFE basierte Füllstoff-Compounds als Trockenschmierstoffdepots umfassen.

Der vorliegenden Erfindung liegt die Aufgabe zu Grunde, die tribologischen Eigenschaften und insbesondere die Verschleißfestigkeit von gattungsgemäßen Gleitlagerverbundwerkstoffen zu verbessern.

Diese Aufgabe durch einen Gleitlagerverbundwerkstoff mit den Merkmalen des Anspruchs 1 gelöst.

Es wird also erfindungsgemäß vorgeschlagen, die einzelnen Füllstoffe, also Thermoplaste, Duroplaste und weitere tribologisch wirksame Stoffe, nicht einzeln der Polymerbasis des Gleitschichtmaterials zuzugeben, sondern diese Füllstoffe zuerst in eine compoundierte Form, also in einen Kunststoffverbund, zu bringen, die dann wiederum in verhältnismäßig feine Compound-Partikel zerkleinert wird. Die Füllstoffe werden also in dieser compoundierten Partikelform als Verbundpartikel dann der PTFE-Polymerbasis zur Bildung des Gleitschichtmaterials zugesetzt. Dieses Gleitschichtmaterial auf PTFE-Basis mit Füllstoffen in compoundierter Form wird dann in die Poren der optionalen porösen Gleitschicht einimprägniert oder auf die Stützschicht aufgebracht bzw. in die Stützschicht eingebracht. Vorteilhafterweise kann hierbei ein Überstand des Gleitschichtmaterials als Einlaufschicht mit verschiedenen Schichtdicken hergestellt werden, die 5 - 300 µm, insbesondere 5 - 150 µm, insbesondere 5 - 80 µm, insbesondere 10 - 60 µm betragen.

Es hat sich überraschenderweise herausgestellt, dass bei einer gegebenen Füllstoffzusammensetzung aus Thermoplast und/oder Duroplast und weiteren tribologisch wirksamen Stoffen eine erhebliche Verbesserung der tribologischen Performance des Gleitlagerverbundwerkstoffs erreicht werden kann, wenn die Füllstoffe oder zumindest ein Teil, vorzugsweise ein großer Teil, der Füllstoffe in compoundierter Form der Polymerbasis des Gleitschichtmaterials zugegeben wird bzw. in compoundierter Form in dem einimprägnierten Gleitschichtmaterial vorliegt. Weiter wurde festgestellt, dass bei gegebener Füllstoffzusammensetzung dieselben tribologischen Eigenschaften mit einer geringeren Füllstoffmenge erreicht werden kann, wenn die Füllstoffe in compoundierter Form zugegeben werden bzw. vorliegen. - Durch die compoundierte Form der Füllstoffe werden auch Systeme im Trockenlauf möglich, die seither nur unter geschmierten Bedingungen betrieben werden konnten.

Bei Gleitschichtmaterialen, die auf PTFE-Basis beruhen, werden typischerweise tragende Thermoplaste und/oder Duroplaste oder verschleißmindernde Partikel als Füllstoffe hinzugegeben, die zwar die Tragfähigkeit und die Verschleißfestigkeit der Polymer-Matrix bzw. des Verbundwerkstoffs zu erhöhen vermögen, jedoch ihrerseits der Zugabe weiterer tribologisch wirksamer Stoffe, insbesondere Festschmierstoffe bedürfen, was grundsätzlich bekannt ist. Mit der vorliegenden Erfindung wurde nun festgestellt, dass es sich als besonders vorteilhaft erweist, wenn diese weiteren Füllstoffe unmittelbar dort tribologisch aktiv werden können, wo sie auch benötigt werden, nämlich dort, wo auch die tragende oder verstärkende Wirkung der die Tragfähigkeit und Verschleißfestigkeit erhöhenden Stoffe stattfindet. Dies lässt sich durch die erfindungsgemäße Compoundierung der Füllstoffe erreichen. Dadurch, dass erfindungsgemäß die betreffenden Füllstoffe, also Thermoplaste oder Duroplaste und die weiteren tribologisch wirksamen Stoffe, zusammen in eine compoundierte Form gebracht werden und als compoundierte Partikel in dem Gleitschichtmaterial vorliegen, ist deren Zusammenwirken noch optimierter möglich als bei separater Einbringung als Einzelfüllstoffe in die Polymerbasis des Gleitschichtmaterials. Gerade hierdurch lässt sich aber in unvorhergesehener Weise eine Leistungssteigerung erreichen.

In Ausführung der Erfindung erweist es sich als vorteilhaft, wenn als Thermoplaste, einzeln oder in Kombination zu mehreren, Polyphenylensulfid, (PPS), Polyphenylensulfon (PPSO₂), Polyaryletherketone (PAEK),(vollaromatische) Polyimide (PI), Polyamide, insbesondere PA6, PA46, PA66, PPA, Polyamidimide (PAI), Polyetherimide (PEI), vollaromatische Polyester (Ekonol), vollaromatische Polyamide (Aramid), Flüssigkristallpolymere (LCP), Polysulfon (PSU), Polyethersulfon (PES), Polyoxymethylen (POM) oder Polyvinylidenfluorid (PVDF) in der compoundierten Form enthalten sind.

Es erweist sich als vorteilhaft, dass als Thermoplast der compoundierten Füllstoffzusammensetzung ein von PTFE verschiedenes Polymer oder eine höchstens 10 Gew.-% PTFE, insbesondere höchstens 5 Gew.-% PTFE aufweisende Polymermischung oder eine PTFE-freie Polymermischung in der compoundierten Form enthalten ist. Diese lassen sich leichter zu einer compoundierten Form verarbeiten.

Vorzugsweise wird als Thermoplast der compoundierten Füllstoffzusammensetzung PEEK, PA, PPS, PPA, LCP (liquid cristal polymer, flüssig kristalline Polymere) oder PI verwendet.

Als Duroplaste können beispielsweise Epoxidharze, Polyesterharze und duromere Polyimide verwendet werden.

In Ausführung der Erfindung erweist es sich auch als vorteilhaft, wenn als weitere tribologisch wirksame Stoffe Verstärkungsstoffe, wie insbesondere Kohlenstofffasern, Glasfasern, Polyamidfasern (insbesondere Aramidfasern); und/oder Festschmierstoffe, wie insbesondere PTFE, ZnS, BaSO₄, Graphit, Ruß, BN, Metallsulfide (wie MoS₂, SnS₂, WS₂); und/oder Kunststoffpartikel, wie insbesondere Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere CaF₂, NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al oder Co-Cr enthalten sind.

Weiter erweist es sich als vorteilhaft, wenn die mittlere Partikelgröße der compoundierten Form der Füllstoffe, also die Größe der Compoundierten Partikel, die der Polymerbasis des Gleitschichtmaterials zugegeben werden, < 400 µm, insbesondere < 300 µm, insbesondere < 250 µm, und weiter insbesondere zwischen 50 µm und 150 µm liegt. Auf diese Partikelgröße wird also der zuvor hergestellte Compound zerkleinert und dann der Polymerbasis des Gleitschichtmaterials zugegeben.

Im Zuge der Herstellung der compoundierten Form der Füllstoffe sind die Compound-Partikel typischerweise irregulär; sie können auch eher kugelig oder knollig oder mit faseriger Oberfläche ausgebildet sein. Bei grundsätzlich irregulärer Form ist die Oberfläche sehr stark vergrößert und weist Hinterschneidungen auf, was die Einbindung in die Polymerbasis, insbesondere in die PTFE-Basis, des Gleitschichtmaterials verbessert. Durch die Herstellung des Gleitlagerverbundwerkstoffs, also insbesondere durch einen Walz- oder Pressvorgang beim Einimprägnieren des Gleitschichtmaterials in die Poren der porösen Gleit- oder Trägerschicht kann auch die Form der Compound-Partikel verändert werden, wodurch sie sich an das poröse Gerüst der Gleitschicht anzupassen vermögen. Im fertigen Produkt beträgt dann die Fläche der dem Gleitschichtmaterial auf Polymerbasis zugesetzten Füllstoffe in compoundierter Form im fertigen Produkt in einem Querschliff betrachtet maximal 0,25 mm², insbesondere maximal 0,2 mm², insbesondere maximal 0,15 mm² und weiter insbesondere 0,5 bis 0,15 mm².

Bei der Herstellung der compoundierten Form mit Thermoplasten wird die Füllstoffmischung, also die Thermoplaste und die weiteren tribologisch wirksamen Stoffe, in eine Extrusionsvorrichtung gebracht, erschmolzen und gemeinsam extrudiert. Das extrudierte und damit compoundierte Material wird zerkleinert, wobei unterschiedliche Mahlverfahren eingesetzt werden können, beispielsweise Feinprallmühlen oder Feinschneidmühlen, um eine geeignete Partikelgröße bzw. Partikelgrößenverteilung zu erreichen. Zur Herstellung von compoundierten Füllstoffen mit Duroplasten werden die weiteren tribologisch wirksamen Stoffe dem Ausgangsharz der Duroplaste, welches in flüssiger Form vorliegt, zugegeben, wobei anschließend der Härter oder Binder zugegeben wird, um den Kunststoffverbund zu bilden. Dieses compoundierte Material wird dann wie vorstehend erwähnt zerkleinert.

Ein weiterer Vorteil von Füllstoffen in compoundierter Form ist darin zu sehen, dass die Füllstoffe in dem Thermoplast und/oder Duroplast stabil verankert sind. Sie werden im Betrieb des Gleitlagers daher weniger zum Ausbrechen aus dem Gleitschichtmaterial neigen.

Weiter hat es sich gezeigt, dass Compound-Partikel aus Thermoplasten oder Duroplasten und weiteren Füllstoffen auch eine gute Anpassungsfähigkeit an die dreidimensionale Topologie der porösen Trägerschicht zeigen. Die Compound-Partikel passen sich beim Einimprägnieren in die Poren der zumeist aus Bronze gebildeten Gleitschicht an das dreidimensionale Gerüst der Gleitschicht an, wobei die kleineren Partikel bis tief in die Poren der Gleitschicht eindringen können.

Hinsichtlich der Zusammensetzung des Gleitschichtmaterials wird erfindungsgemäß vorgeschlagen, dass das Gleitschichtmaterial 1 - 50 Vol.-% Thermoplaste und/oder Duroplaste und 1 - 40 Vol.-% weitere tribologisch wirksame Stoffe und als Rest die Polymerbasis umfasst, wobei die 1 - 50 Vol.-% Thermoplaste und/oder Duroplaste und die 1 - 40 Vol.-% weiteren tribologisch wirksamen Stoffe in compoundierter Form in der Polymerbasis vorliegen und höchstens 50 Vol.-% des Gleitschichtmaterials ausmachen.

Bevorzugtermaßen weist das Gleitschichtmaterial 1 - 40 Vol.-%, insbesondere 1 - 30 Vol.-% Thermoplaste und/oder Duroplaste und 1 - 30 Vol.-%, insbesondere 1 - 25 Vol.-% weitere Füllstoffe auf.

Es erweist sich als vorteilhaft, wenn der Anteil der Füllstoffe in compoundierter Form an dem Gleitschichtmaterial 5 - 30 Vol.-%, insbesondere 5 - 25 Vol.-%, insbesondere 10 - 20 Vol.-% beträgt.

Weiter erweist es sich als vorteilhaft, wenn der Anteil der matrixbildenden Polymerbasis an dem Gleitschichtmaterial wenigstens 60 Vol.-%, insbesondere wenigstens 65 Vol.-%, insbesondere 65 - 85 Vol.-%, und weiter insbesondere 70 - 80 Vol.-% beträgt.

Bei einem bevorzugten Gleitlagerverbundwerkstoff beruht die Polymerbasis des Gleitschichtmaterials auf PTFE-Basis. Dies bedeutet nicht zwingend, dass die gesamte Polymerbasis aus PTFE bestehen muss. Anteile bis 20 Gewichtsprozent des Polymeranteils, insbesondere bis 15 Gewichtsprozent und vorzugsweise nur bis 10 Gewichtsprozent der Polymerbasis können durch andere Fluorthermoplaste wie z.B. PVDF, PFA, FEP, ECTFE, ETFE, ersetzt sein.

Nach einem weiteren Erfindungsgedanken wird vorgeschlagen, dass in dem Gleitschichtmaterial unterschiedliche Füllstoffmischungen jeweils in compoundierter Form enthalten sind, das heißt Compoundpartikel unterschiedlicher Füllstoffzusammensetzung. Dies ermöglicht es, Eigenschaften verschiedener Füllstoffzusammensetzungen in einem Produkt zu vereinen.

Nach einem weiteren Erfindungsgedanken wird vorgeschlagen, dass zusätzlich zu den Füllstoffen in compoundierter Form weitere tribologisch wirksame Stoffe in nicht compoundierter Form, also jeweils einzeln, als Einzelfüllstoffe in der Polymermatrix des Gleitschichtmaterials enthalten sind. Auch verschiedene solcher Einzelfüllstoffe können enthalten sein. Bei diesen Stoffen in nicht compoundierter Form handelt es sich vorzugsweise um eher schmierende Füllstoffe als um tragende und die Verschleißfestigkeit erhöhende härtende Stoffe. In Weiterbildung dieses Erfindungsgedankens wird vorgeschlagen, dass als weitere tribologisch wirksame Stoffe die in nicht compoundierter Form, also jeweils einzeln in der Polymermatrix des Gleitschichtmaterials enthalten sind, Festschmierstoffe, wie insbesondere Bornitrid (vorzugsweise hexagonal), Graphit, BaSO₄ und/oder Metallsulfide, wie insbesondere MoS₂, SnS₂, WS₂, und/oder Schichtsilikate, wie insbesondere Kaolin, Glimmer, Wollastonit, und/oder Metalloxide, wie insbesondere Fe₂O₃, Al₂O₃, TiO₂, vorhanden sind. Sie sind vorteilhafterweise in einem Anteil von insgesamt 1 - 20 Vol.-%, insbesondere 5 - 15 Vol.-% des Gleitschichtmaterials enthalten.

Die nachfolgende Tabelle führt beispielhafte bevorzugte Füllstoffzusammensetzungen von Thermoplasten und weiteren tribologisch wirksamen Stoffen als Einzelfüllstoffe auf (Beispiel Nr. 1 und 3). Weiter führt die Tabelle dieselben Füllstoffzusammensetzungen in compoundierter Form auf (Beispiel Nr. 2 und 4), d.h. es werden zunächst Kunststoffverbunde (Compounds) aus den einzelnen Füllstoffen hergestellt, wobei jeweils PEEK die Basis oder Matrix für die übrigen Stoffe bildet. Diese Kunststoffverbunde oder Compounds werden dann auf eine gewünschte Partikelgröße zerkleinert, die dann wie Einzelfüllstoffe einem Gleitschichtmaterial auf Polymerbasis zugesetzt werden können. Beispiel 5 zeigt Füllstoffzusammensetzungen in compoundierter Form mit zusätzlichem Einzelfüllstoff. Beispielhaft bildet PTFE die Polymerbasis.

| Beispiel Nr. | Polymerbasis/Füllstoffe | | Anteile am Gleitschichtmaterial [Vol.-%] | Füllstoffform |
|---|---|---|---|---|
| 1 | Polymerbasis: PTFE | | 90 | Einzelfüllstoffe |
| | PEEK | | 7,5 | |
| | C-Fasern | | 1,0 | |
| | Graphit | | 0,7 | |
| | TiO2 | | 0,4 | |
| | ZnS | | 0,4 | |
| 2 | Polymerbasis: PTFE | | 90 | Compound |
| | in compoundierter Form: | | 10 davon: | |
| | | 75 Vol.-% PEEK | 7,5 | |
| | | 10 Vol.-% C-Fasern | 1,0 | |
| | | 7 Vol.-% Graphit | 0,7 | |
| | | 4 Pol.-% TiO₂ | 0,4 | |
| | | 4 Vol.-% ZnS | 0,4 | |
| 3 | Polymerbasis: PTFE | | 90 | Einzelfüllstoffe |
| | PEEK | | 7,8 | |
| | C-Fasern | | 0,9 | |
| | Graphit | | 0,6 | |
| | PTFE | | 0,7 | |
| 4 | Polymerbasis: PTFE | | 90 | Compound |
| | in compoundierter Form: | | 10 davon: | |
| | | 78 Vol.-% PEEK | 7,8 | |
| | | 9 Vol.-% C-Fasern | 0,9 | |
| | | 6 Vol.-% Graphit | 0,6 | |
| | | 7 Vol.-% PTFE | 0,7 | |
| 5 | Polymerbasis: PTFE | | 75 | Einzelfüllstoff + Compound |
| | hexagonales Bornitrid | | 10 | |
| | in compoundierter Form: | | 15 davon: | |
| | | 75 Vol.-% PEEK | 11,25 | |
| | | 10 Vol.-% C-Fasern | 1,5 | |
| | | 7 Vol.-% Graphit | 1,05 | |
| | | 4 Vol.-% TiO₂ | 0,6 | |
| | | 4 Vol.-% ZnS | 0,6 | |

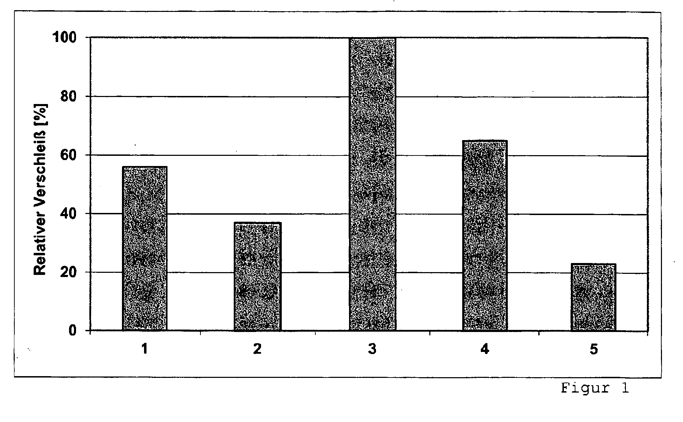

Die vorstehenden Komponenten wurden zur Herstellung eines Gleitschichtmaterials auf Polymerbasis als Einzelfüllstoffe (Beispiel Nr. 1 und 3) oder als gemahlener Compound (Beispiel Nr. 2 und 4 und 5) in eine wässrige PTFE-Dispersion gemischt, und anschließend wurde das PTFE gefällt. Das Gleitschichtmaterial der Beispiele 1-4 umfasste einen Anteil von 90 Vol.-% PTFE Matrix und das Beispiels 5 einen Anteil von 75 Vol.-% PTFE Matrix. Das so gefertigte Gleitschichtmaterial wurde in die Poren der auf eine Stützschicht aus Stahl gesinterten porösen Gleitschicht aus Bronze einimprägniert. Die tribologischen Eigenschaften wurden an daraus gefertigten Gleitlagern bestimmt, die typischerweise buchsenförmig mit einer Stoßfuge ausgebildet sind. Die Verschleißwerte bei diesen Gleitlagern mit Gleitschichtmaterialien mit Füllstoffen der Beispiele Nr. 1 bis 5 sind in der Figur 1 dargestellt. Die Gleitlager wurden in einem Trockenlauf mit oszillierender Bewegung (10Hz, 0,2 m/s) unter einer vertical wirkenden Last von 3700 N bei einer Umgebungstemperatur von 80°C getestet. Als Gegenkörper wurde eine Welle aus 100Cr6 Stahl verwendet.

Die Ergebnisse der Figur 1 zeigen, dass durch die erfindungsgemäß compoundierte Form der Füllstoffe in dem Gleitschichtmaterial gegenüber einem Gleitschichtmaterial mit einzeln zugegebenen Füllstoffen derselben Füllstoffzusammensetzung ein signifikanter performancesteigernder Einfluss auf die Verschleißfestigkeit des resultierenden Gleitlagerverbundwerkstoffs bzw. eines hieraus hergestellten Gleitlagers erzielt wird. Dies wird darauf zurückgeführt, dass sowohl die tragenden, festigkeitssteigernden und verschleißhemmenden Stoffe als auch die eher schmierenden, also reibwertreduzierenden Stoffe unmittelbar beieinander in den compoundierten Füllstoffpartikeln vorgesehen sind.

Gegenstand der Erfindung sind auch Gleitlagerelemente, die aus erfindungsgemäßem Gleitlagerverbundwerkstoff, typischerweise durch Biegerollprozesse ausgehend von aus dem Gleitlagerverbundwerkstoff ausgestanzten oder abgelängten Platinenabschnitten, hergestellt sind. Die Gleitlagerelemente sind Streifen oder gerollte Buchsen mit einer Stoßfuge, insbesondere Bundbuchsen, oder Schalen mit zylindrischer oder sphärischer Geometrie.

## Patentansprüche

1. Gleitlagerverbundwerkstoff mit einer Stützschicht, insbesondere aus Stahl oder Bronze, optional einer darauf aufgebrachten porösen Gleitschicht, insbesondere aus Bronze, und mit einem Gleitschichtmaterial auf PTFE-Basis, mit tribologische Eigenschaften verbessernden Füllstoffen, **dadurch gekennzeichnet, dass** Füllstoffe umfassend Thermoplaste und/oder Duroplaste und weitere tribologisch wirksame Stoffe zusammen in compoundierter Form in der PTFE-Basis des Gleitschichtmaterials vorliegen, wobei der Anteil der Thermoplaste und/oder Duroplaste an der compoundierten Form 40 - 95 Vol.-% und der Anteil der weiteren tribologisch wirksamen Stoffe an der compoundierten Form entsprechend 60 - 5 Vol.-% beträgt und dass als Thermoplast der compoundierten Füllstoffzusammensetzung ein von PTFE verschiedenes Polymer oder eine höchstens 10 Gew.-% PTFE aufweisende Polymermischung oder eine PTFE-freie Polymermischung in der compoundierten Form enthalten ist.

2. Gleitlagerverbundwerkstoff nach Anspruch 1, **dadurch gekennzeichnet, dass** als Thermoplaste, einzeln oder in Kombination zu mehreren, Polyphenylensulfid, (PPS), Polyphenylensulfon (PPSO₂), Polyaryletherketone (PAEK),(vollaromatische) Polyimide (PI), Polyamide, insbesondere PA6, PA46, PA66, PPA, Polyamidimide (PAI), Polyetherimide (PEI), vollaromatische Polyester (Ekonol), vollaromatische Polyamide (Aramid), Flüssigkristallpolymere (LCP), Polysulfon (PSU), Polyethersulfon (PES), Polyoxymethylen (POM) oder Polyvinylidenfluorid (PVDF) in der compoundierten Form enthalten sind.

3. Gleitlagerverbundwerkstoff nach Anspruch 1 oder 2,
**dadurch gekennzeichnet, dass** als Thermoplast der compoundierten Füllstoffzusammensetzung eine höchstens 5 Gew.-% PTFE aufweisende Polymermischung in der compoundierten Form enthalten ist.

4. Gleitlagerverbundwerkstoff nach Anspruch 1, 2 oder 3, **dadurch gekennzeichnet, dass** als Thermoplast der compoundierten Füllstoffzusammensetzung PEEK, PA, PPS, PPA, LCP (liquid cristal polymer, flüssig kristalline Polymere) oder PI enthalten ist.

5. Gleitlagerverbundwerkstoff nach einem oder mehreren der vorstehenden Ansprüche, **dadurch gekennzeichnet, dass** als weitere tribologisch wirksame Stoffe Verstärkungsstoffe, wie insbesondere Kohlenstofffasern, Glasfasern, Polyamidfasern (insbesondere Aramidfasern); und/oder Festschmierstoffe, wie insbesondere PTFE, ZnS, BaSO₄, Graphit, Ruß, BN, Metallsulfide (wie MoS₂, SnS₂, WS₂); und/oder Kunststoffpartikel, wie insbesondere Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere CaF₂, NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al oder Co-Cr enthalten sind.

6. Gleitlagerverbundwerkstoff nach einem oder mehreren der vorstehenden Ansprüche, **dadurch gekennzeichnet, dass** die Fläche der dem Gleitschichtmaterial auf Polymerbasis zugesetzten Füllstoffe in compoundierter Form im fertigen Produkt in einem Querschliff betrachtet maximal 0,25 mm², insbesondere maximal 0,2 mm², insbesondere maximal 0,15 mm² und weiter insbesondere 0,5 bis 0,15 mm² beträgt.

7. Gleitlagerverbundwerkstoff nach einem oder mehreren der vorstehenden Ansprüche, **dadurch gekennzeichnet, dass** das Gleitschichtmaterial 1 - 50 Vol.-% Thermoplaste und/oder Duroplaste und 1 - 40 Vol.-% weitere tribologisch wirksame Stoffe und als Rest die Polymerbasis umfasst, wobei die 1 - 50 Vol.-% Thermoplaste und/oder Duroplaste und die 1 - 40 Vol.-% weiteren tribologisch wirksamen Stoffe in compoundierter Form in der PTFE-basis vorliegen und höchstens 50 Vol.-% des Gleitschichtmaterials ausmachen.

8. Gleitlagerverbundwerkstoff nach Anspruch 7, **dadurch gekennzeichnet, dass** das Gleitschichtmaterial 1 - 40 Vol.-%, insbesondere 1 - 30 Vol.-% Thermoplaste und/oder Duroplaste und 1 - 30 Vol.-%, insbesondere 1 - 25 Vol.-% weitere Füllstoffe aufweist.

9. Gleitlagerverbundwerkstoff nach einem oder mehreren der vorstehenden Ansprüche, **dadurch gekennzeichnet, dass** der Anteil der Füllstoffe in compoundierter Form an dem Gleitschichtmaterial 5 - 30 Vol.-%, insbesondere 5 - 25 Vol.-%, insbesondere 10 - 20 Vol.- % beträgt.

10. Gleitlagerverbundwerkstoff nach Anspruch 7, 8 oder 9, **dadurch gekennzeichnet, dass** der Anteil der matrixbildenden PTFE-Basis an dem Gleitschichtmaterial wenigstens 60 Vol.-%, insbesondere wenigstens 65 Vol.-%, insbesondere 65 - 85 Vol.-%, und weiter insbesondere 70 - 80 Vol.-% beträgt.

11. Gleitlagerverbundwerkstoff nach einem oder mehreren der vorstehenden Ansprüche, **dadurch gekennzeichnet, dass** unterschiedliche Füllstoffmischungen jeweils in compoundierter Form in dem Gleitschichtmaterial enthalten sind.

12. Gleitlagerverbundwerkstoff nach einem oder mehreren der vorstehenden Ansprüche, **dadurch gekennzeichnet, dass** zusätzlich zu den Füllstoffen in compoundierter Form weitere tribologisch wirksame Stoffe in nicht compoundierter Form, also jeweils einzeln in der PTFEMatrix des Gleitschichtmaterials enthalten sind, insbesondere in einem Anteil von insgesamt 1 - 20 Vol.-%, insbesondere 5 - 15 Vol.-%.

13. Gleitlagerverbundwerkstoff nach Anspruch 12, **dadurch gekennzeichnet, dass** als weitere tribologisch wirksame Stoffe, die in nicht compoundierter Form, also jeweils einzeln in der Polymermatrix des Gleitschichtmaterials enthalten sind, Festschmierstoffe, wie insbesondere Bornitrid, Graphit, BaSO₄ und/oder Metallsulfide, wie insbesondere MOS₂, SnS₂, WS₂, und/oder Schichtsilikate, wie insbesondere Kaolin, Glimmer, Wollastonit, und/oder Metalloxide, wie insbesondere Fe₂O₃, Al₂O₃, TiO₂, vorhanden sind.

14. Gleitlagerelement hergestellt aus einem Gleitlagerverbundwerkstoff nach einem oder mehreren der vorstehenden Ansprüche.

## Claims

1. A composite sliding bearing material with a protective layer, in particular of steel or bronze, and optionally with a porous sliding coat applied to it, in particular of bronze, and with a PTFE-based sliding coat material, with fillers that improve tribological properties, **characterised in that** fillers comprising thermoplastics and/or thermosetting plastics and additional tribologically active substances are present together in compounded form in the PTFE base of the sliding coat material, wherein the proportion of thermoplastics and/or thermosetting plastics of the compounded form is 40 - 95% by vol., and the proportion of the additional tribologically active substances of the compounded form is correspondingly 60 - 5% by vol., and **in that** a polymer other than PTFE or a polymer mixture having a maximum of 10% by weight of PTFE or a PTFE-free polymer mixture is contained in the compounded form as the thermoplastic in the compounded filler composition.

2. The composite sliding bearing material according to Claim 1, **characterised in that** polyphenylene sulphide (PPS), polyphenylene sulphone (PPSO₂), polyarylether ketones (PAEK), (fully aromatic) polyimides (PI), polyamides, in particular PA6, PA46, PA66, PPA, polyamidimides (PAI), polyetherimides (PEI), fully aromatic polyesters (Ekonol), fully aromatic polyamides (aramide), liquid crystal polymers (LCP), polysulphone (PSU), polyethersulphone (PES), polyoxymethylene (POM) or polyvinylidene fluoride (PVDF) are contained in the compounded form as thermoplastics, individually or several in combination.

3. The composite sliding bearing material according to Claim 1 or 2, **characterised in that** a polymer mixture having a maximum of 5% by weight of PTFE is contained in the compounded form as the thermoplastic of the compounded filler composition.

4. The composite sliding bearing material according to Claim 1, 2 or 3, **characterised in that** PEEK, PA, PPS, PPA, LCP (liquid crystal polymer, liquid crystalline polymers) or PI is contained as the thermoplastic of the compounded filler compsition.

5. The composite sliding bearing material according to one or more of the preceding claims, **characterised in that** reinforcing materials, in particular carbon fibres, glass fibres, polyamide fibres (in particular aramide fibres); and/or solid lubricants, in particular PTFE, ZnS, BaSO₄, graphite, carbon black, BN, metal sulphides (such as MoS₂, SnS₂, WS₂); and/or plastic particles, in particular aramide (PPTA), PPSO₂, PI and PAI particles, polyacrylate particles (PAR), PBA particles, PBI particles; and/or metal oxides, in particular Fe₂O₃, Al₂O₃, SiO₂, CrO₂, TiO₂, CuO, MgO, ZnO; and/or hard material particles, in particular ceramic particles, such as SiC, Si₃N₄, BC, cubic BN; and/or fluorides, in particular CaF₂, NaF, AlF₃; and/or compound silicates, in particular kaolin, mica, wollastonite, talcum, silicic acid; and/or metallic fine powders, in particular bronze and bismuth; and/or pigments or mixed phase oxide pigments, in particular Co-Al, Cr-Sb-Ti, Co-Ti, Fe-Al or Co-Cr, are contained as additional tribologically active substances.

6. The composite sliding bearing material according to one or more of the preceding claims, **characterised in that** the area of the fillers added to the polymer-based sliding coat material, in compounded form in the finished product, considered in a transverse microsection, amounts to a maximum of 0.25 mm², in particular a maximum of 0.2 mm², in particular a maximum of 0.15 mm², and further in particular 0.5 to 0.15 mm².

7. The composite sliding bearing material according to one or more of the preceding claims, **characterised in that** the sliding coat material contains 1 - 50% by vol. of thermoplastics and/or thermosetting plastics and 1 - 40% by vol. of additional tribologically active substances and, as a residue, the polymer base, wherein the 1 - 50% by vol. of thermoplastics and/or thermosetting plastics and the 1 - 40% by vol. of further tribologically active substances are present in compounded form in the PTFE base, and constitute a maximum of 50% by vol. of the sliding coat material.

8. The composite sliding bearing material according to Claim 7, **characterised in that** the sliding coat material contains 1 - 40% by vol., in particular 1 - 30% by vol. of thermoplastics and/or thermosetting plastics and 1 - 30% by vol., in particular 1 - 25% by vol. of further fillers.

9. The composite sliding bearing material according to one or more of the preceding claims, **characterised in that** the proportion of fillers in compounded form in the sliding coat material amounts to 5 - 30% by vol., in particular 5 - 25% by vol., and in particular 10 - 20% by vol.

10. The composite sliding bearing material according to Claim 7, 8 or 9, **characterised in that** the proportion of matrix-forming PTFE base of the sliding coat material amounts to at least 60% by vol., in particular at least 65% by vol., in particular 65 - 85% by vol. and further in particular 70 - 80% by vol.

11. The composite sliding bearing material according to one or more of the preceding claims, **characterised in that** different filler mixtures, each in compounded form, are contained in the sliding coat material.

12. The composite sliding bearing material according to one or more of the preceding claims, **characterised in that** in addition to the fillers in compounded form, additional tribologically active materials are contained in the PTFE matrix of the sliding coat material in non-compounded form, i.e. individually, in particular in a proportion of a total of 1 - 20% by vol., in particular 5 - 15% by vol.

13. The composite sliding bearing material according to Claim 12, **characterised in that** solid lubricants, in particular boron nitride, graphite, BaSO₄ and/or metal sulphides, in particular MoS₂, SnS₂, WS₂, and/or compound silicates, in particular kaolin, mica, wollastonite, and/or metal oxides, in particular Fe₂O₃, Al₂O₃, TiO₂, are present as further tribologically active substances which are contained in non-compounded form, i.e. individually in the polymer matrix of the sliding coat material.

14. A sliding bearing element manufactured from a composite sliding bearing material according to one or more of the preceding claims.

## Revendications

1. Matériau composite pour palier lisse comprenant une couche de protection, en particulier en acier ou en bronze, de manière optionnelle une couche anti-friction poreuse appliquée par-dessus, en particulier en bronze, et comprenant un matériau de couche anti-friction à base de PTFE, avec des matières de charge améliorant les propriétés tribologiques, **caractérisé en ce que** des matières de charge comprenant des matières thermoplastiques et/ou des matières plastiques dures et d'autres matières tribologiquement actives coexistent sous une forme compoundée dans la base PTFE du matériau de couche anti-friction, la proportion des matières thermoplastiques et/ou des matières plastiques dures au niveau de la forme compoundée étant de 40 à 95 % en volume et la proportion des autres matières tribologiquement actives au niveau de la forme compoundée étant de manière correspondante de 60 à 5 % en volume, et un polymère différent du PTFE ou un mélange polymère présentant au plus 10 % en poids de PTFE ou un mélange polymère exempt de PTFE est contenu dans la forme compoundée en tant que matière thermoplastique de la composition compoundée formant matière de charge.

2. Matériau composite pour palier lisse selon la revendication 1, **caractérisé en ce que** du sulfure de polyphénylène (PPS), du polyphénylsulfone (PPSO₂), des polyaryléthercétones (PAEK), des polyimides (PI) (totalement aromatiques), des polyamides, en particulier PA6, PA46, PA66, PPA, des polyamidimides (PAI), des polyétherimides (PEI), des polyesters totalement aromatiques (Ekonol), des polyamides totalement aromatiques (aramide), des polymères à cristaux liquides (LCP), du polysulfone (PSU), du polyéthersulfone (PES), du polyoxyméthylène (POM) ou du fluorure de polyvinylidène (PVDF) sont contenus dans la forme compoundée, individuellement ou en combinaison avec un ou plusieurs autres, en tant que matières thermoplastiques.

3. Matériau composite pour palier lisse selon la revendication 1 ou 2, **caractérisé en ce qu'**un mélange polymère présentant au plus 5 % en poids de PTFE est contenu dans la forme compoundée en tant que matière thermoplastique de la composition compoundée formant matière de charge.

4. Matériau composite pour palier lisse selon l'une quelconque des revendications 1, 2 ou 3, **caractérisé en ce que** PEEK, PA, PPS, PPA, LCP (polymères à cristaux liquides) ou PI est contenu en tant que matière thermoplastique de la composition compoundée formant matière de charge.

5. Matériau composite pour palier lisse selon l'une quelconque des revendications précédentes, **caractérisé en ce que** des matières de renforcement, comme en particulier des fibres de carbone, des fibres de verre, des fibres polyamides (en particulier des fibres d'aramide); et/ou des matières lubrifiantes solides, comme en particulier PTFE, ZnS, BaSO₄, graphite, noir de fumée, BN, sulfures métalliques (comme MoS₂, SnS₂, WS₂); et/ou des particules de matière plastique, comme en particulier des particules d'aramide (PPTA), de PPSO₂, de PI et de PAI, des particules de polyacrylate (PAR), des particules de PBA, des particules de PBI; et/ou des oxydes métalliques, comme en particulier Fe₂O₃, Al₂O₃, SiO₂, CrO₂, TiO₂, CuO, MgO, ZnO; et/ou des particules de matériau à résistance mécanique élevée, en particulier des particules céramiques, comme SiC, Si₃N₄, BC, BN cubique; et/ou des fluorures, comme en particulier CaF₂, NaF, AlF₃; et/ou des phyllosilicates, comme en particulier du kaolin, du mica, de la wollastonite, du talc, de l'acide silicique; et/ou des poudres fines métalliques, comme en particulier du bronze et du bismuth; et/ou des pigments ou des pigments à base d'oxyde en phase mixte, comme en particulier Co-Al, Cr-Sb-Ti, Co-Ti, Fe-Al ou Co-Cr sont contenus en tant qu'autres matières tribologiquement actives.

6. Matériau composite pour palier lisse selon l'une quelconque des revendications précédentes, **caractérisé en ce que** la surface des matières de charge ajoutées au matériau de couche antifriction à base de polymère, considérée en coupe transversale sous forme compoundée dans le produit fini, est au plus de 0,25 mm², en particulier au plus de 0,2 mm², en particulier au plus de 0,15 mm² et de manière encore plus particulière de 0,5 à 0,15 mm².

7. Matériau composite pour palier lisse selon l'une quelconque des revendications précédentes, **caractérisé en ce que** le matériau de couche anti-friction comprend 1 à 50 % en volume de matières thermoplastiques et/ou de matières plastiques dures et 1 à 40 % en volume d'autres matières tribologiquement actives et le reste est constitué par la base polymère, les 1 à 50 % en volume de matières thermoplastiques et/ou de matières plastiques dures et les 1 à 40 % en volume d'autres matières tribologiquement actives étant présents sous forme compoundée dans la base PTFE et constituant au plus 50 % en volume du matériau de couche anti-friction.

8. Matériau composite pour palier lisse selon la revendication 7, **caractérisé en ce que** le matériau de couche anti-friction présente 1 à 40 % en volume, en particulier 1 à 30 % en volume de matières thermoplastiques et/ou de matières plastiques dures et 1 à 30 % en volume, en particulier 1 à 25 % en volume d'autres matières de charge.

9. Matériau composite pour palier lisse selon l'une quelconque des revendications précédentes, **caractérisé en ce que** la proportion des matières de charge sous forme compoundée au niveau du matériau de couche anti-friction est de 5 à 30 % en volume, en particulier de 5 à 25 % en volume, en particulier de 10 à 20 % en volume.

10. Matériau composite pour palier lisse selon l'une quelconque des revendications 7, 8 ou 9, **caractérisé en ce que** la proportion de la base PTFE formant matrice au niveau du matériau de couche anti-friction est au moins de 60 % en volume, en particulier d'au moins 65 % en volume, en particulier de 65 à 85 % en volume, et de manière encore plus particulière de 70 à 80 % en volume.

11. Matériau composite pour palier lisse selon l'une quelconque des revendications précédentes, **caractérisé en ce que** différents mélanges de matières de charge sont contenus respectivement sous forme compoundée dans le matériau de couche anti-friction.

12. Matériau composite pour palier lisse selon l'une quelconque des revendications précédentes, **caractérisé en ce que** d'autres matières tribologiquement actives sous forme non composée, et donc respectivement de manière individuelle, sont contenues dans la matrice PTFE du matériau de couche antifriction en plus des matières de charge sous forme compoundée, en particulier selon une proportion d'au total 1 à 20 % en volume, en particulier de 5 à 15 % en volume.

13. Matériau composite pour palier lisse selon la revendication 12, **caractérisé en ce que** des matières lubrifiantes solides, comme en particulier du nitrure de bore, du graphite, BaSO₄ et/ou des sulfures métalliques, comme en particulier MoS₂, SnS₂, WS₂ et/ou des phyllosilicates, comme en particulier du kaolin, du mica, de la wollastonite et/ou des oxydes métalliques, comme en particulier Fe₂O₃, Al₂O₃, TiO₂, sont présents en tant qu'autres matières tribologiquement actives qui sont contenues sous une forme non compoundée, et donc respectivement de manière individuelle, dans la matrice polymère du matériau de couche anti-friction.

14. Elément de palier lisse fabriqué à partir d'un matériau composite pour palier lisse selon l'une quelconque des revendications précédentes.
